# EUROPÄISCHE PATENTANMELDUNG

(11) **EP 4 625 226 A1**
(43) Veröffentlichungstag der Anmeldung: **01.10.2025**
(21) Anmeldenummer: 24166879.7
(22) Anmeldetag: 27.03.2024
(51) Int. Cl.: G06F 21/57, G06F 21/56

(54) **COMPUTER-IMPLEMENTIERTES VERFAHREN ZUR DURCHSUCHUNG VON SOFTWAREDATEN UND COMPUTERPROGRAMMPRODUKT**

(71) Anmelder: Siemens Aktiengesellschaft, 80333 München (DE)
(72) Erfinder: Zwanzger, Johannes, 85579 Neubiberg (DE)
(74) Vertreter: Siemens Patent Attorneys

(57) **Zusammenfassung**

Das computer-implementierte Verfahren dient zur Durchsuchung von Softwaredaten auf Hash-Abschnitte. Bei dem Verfahren werden aus den Softwaredaten solche Datenabschnitte gewählt, welche einem Zufallskriterium genügen, das zufällig verteilte Daten von nicht-zufällig verteilten Daten abgrenzt, und bei dem Verfahren werden auf die Hash-Abschnitte vorwiegend die gewählten Datenabschnitte durchsucht.

Das Computerprogrammprodukt enthält Programmbefehle, die einen Computer zur Ausführung eines Verfahrens nach einem der vorhergehenden Ansprüche veranlassen, wenn die Programmbefehle auf dem Computer ablaufen.

## Beschreibung

Die Erfindung betriff ein computer-implementiertes Verfahren zur Durchsuchung von Softwaredaten auf Hash-Abschnitte sowie ein Computerprogrammprodukt zur Ausführung eines solchen Verfahrens.

Softwaredaten, enthalten in der Software oder der Firmware von Produkten, sollten vor der Auslieferung der Software oder der Firmware auf Schwachstellen untersucht werden. Eine mögliche Schwachstelle stellen Passwörter dar, die entweder in den ausführbaren Dateien der Software selbst oder in deren Konfigurationsfiles fest einkodiert sind. Solche Passwörter können zum Beispiel aus folgenden Gründen enthalten sein:
- es handelt sich um einen vergessenen "Debug-Schalter", mit dem während der Entwicklung bestimmte Features zum leichteren Testen oder Debuggen freigeschaltet werden können und/oder
- es handelt sich um ein vorkonfiguriertes Default-Passwort für bestimmte Funktionen der Software und/oder
- das Passwort ist Teil einer Backdoor, also eines von Angreifern absichtlich eingebrachten Mechanismus', um die Software bzw. die damit betriebenen Geräte nach deren Inverkehrbringung kontrollieren zu können.

In ausführbaren Dateien oder Konfigurationsfiles enthaltene Passwörter sollten aus Security-Sicht natürlich vermieden werden, sind in der Praxis aber immer wieder zu beobachten.

Es sind dedizierte Passwortcracker bekannt, mit denen auf Basis einer Passwortliste, ggf. zusammen mit Regeln zur Ableitung weiterer Passwörter, nach Urbildern zu einer vorgegebenen Liste von Hashes gesucht werden kann, etwa die Software "John the Ripper": https://www.openwall.com/john/.

Mittels dieses Passwortcrackers kann direkt eine feststehende Passwortliste aufgerufen werden, auf welche dann eine Vielzahl unterschiedlicher Hashes angewendet werden und gegen eine Liste von Zielhashes abgeglichen werden können. Zur Performancesteigerung bei den Berechnungen unterstützt der Passwortcracker die Nutzung einer Grafikkarte.

Solche Passwortcracker sind jedoch nicht darauf ausgelegt, Passworthashes in einer Vielzahl großer (Binär-)Dateien zu finden. Dies ist grundsätzlich mit manuellem Zusatzaufwand möglich, geht jedoch mit einigem Ressourcen-Overhead, wie insbesondere Rechenzeit und Speicherbedarf, einher.

Es ist daher Aufgabe der Erfindung, ein verbessertes Verfahren zur Durchsuchung von Softwaredaten anzugeben, welches verbessert durchführbar ist. Insbesondere soll mit dem erfindungsgemäßen Verfahren der Ressourcen-, insbesondere der Arbeitsspeicherbedarf, gesenkt werden.

Diese Aufgabe der Erfindung wird mit einem Verfahren mit den in Anspruch 1 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren zur Durchsuchung von Softwaredaten ist ein computerimplementiertes Verfahren zur Durchsuchung von Softwaredaten auf Hash-Abschnitte. Dabei werden aus den Softwaredaten solche Datenabschnitte ausgewählt, die einem Zufallskriterium genügen, das zufällig verteilte Daten von nicht-zufällig verteilten Daten abgrenzt. Vorwiegend werden die ausgewählten Datenabschnitte auf die Hash-Abschnitte hin durchsucht. Ein erheblicher Vorteil des erfindungsgemäßen Verfahrens besteht darin, dass der zu durchsuchende Datenumfang bei der Durchsuchung reduziert wird, was zu einer verbesserten Effizienz und geringeren Ressourcenanforderungen führt. Gleichzeitig wird trotz der geringeren Ressourcenanforderung ein besonders hoher Anteil von Hash-Abschnitten gefunden, da Hash-Abschnitte grundsätzlich Daten enthalten, die zufallsverteilten Daten ähneln. Folglich genügen sehr viele Hash-Abschnitte dem Zufallskriterium. Es kann sich bei dem erfindungsgemäßen Verfahren auf die ausgewählten Datenabschnitte konzentriert werden, die mit hoher Wahrscheinlichkeit Hash-Abschnitte enthalten, sodass nur ein verringerter Anteil der Softwaredaten durchsucht werden muss, aber dennoch eine hohe Rate an Hash-Abschnitten gefunden werden kann.

Zweckmäßig werden mit dem Zufallskriterium diejenigen Daten, welche das Zufallskriterium erfüllen, als zufällig angesehen.

Unter der Wendung "vorwiegend werden die ausgewählten Datenabschnitte auf die Hash-Abschnitte hin durchsucht" ist zu verstehen, dass bevorzugt und priorisiert die ausgewählten Datenabschnitte, d. h. die Datenabschnitte mit zufällig verteilten Daten, auf die Hash-Abschnitte hin untersucht werden. Vorzugsweise wird mindestens ein Mindestanteil, etwa als Quotient bemessen, der ausgewählten Daten und höchstens ein Höchstanteil, etwa ebenfalls als Quotient bemessen, derjenigen Softwaredaten, welche nicht zu den ausgewählten Daten gehören, auf die Hash-Abschnitte hin untersucht. Zweckmäßig ist dabei der Mindestanteil größer als der Höchstanteil und bevorzugt ist der Mindestanteil viermal größer als der Höchstanteil und idealerweise werden ausschließlich die ausgewählten Daten auf Hash-Abschnitte hin untersucht.

Dies ist insbesondere bei Hash-Abschnitten in Form von Passwort-Hashes relevant. Gerade Passwort-Hashes stellen ein hohes Sicherheitsrisiko dar, welches mit dem erfindungsgemäßen Verfahren reduziert werden kann. Besonders bevorzugt sind oder umfassen die Hash-Abschnitte, auf die hin die ausgewählten Datenabschnitte durchsucht werden, Passwort-Hashes. Vorzugsweise werden bei dem erfindungsgemäßen Verfahren Passwort-Hashes, die zu häufig verwendeten Passwörtern gehören, in einer Datenbank von Passwort-Hashes buchgehalten, welche dann als Hash-Abschnitte verwendet werden, auf welche hin die ausgewählten Datenabschnitte der Softwaredaten durchsucht werden. Alternativ kann eine Datenbank von Passwörtern gehalten werden, aus denen zur Laufzeit des erfindungsgemäßen Verfahrens mit einer oder mehreren Hashfunktionen die zu findenden Hash-Abschnitte abgeleitet werden. Dies hat den Vorteil, dass bei Nutzung mehrerer Hashfunktionen weniger Daten gespeichert werden müssen.

Das erfindungsgemäße Verfahren umfasst also mit anderen Worten ausgedrückt eine Filtermethode, mit der die Suche nach Hashabschnitten wie insbesondere Passwort-Hashes, also Hashes von Passwörtern, in der Software beschleunigt und zugleich deren Speicherbedarf signifikant reduziert werden kann. Ein solcher Passwort- Hash entsteht durch Anwendung einer Hashfunktion, etwa NTLM, MD5, SHA256, oder einer bewusst aufwändig gestalteten Passwort-Hashing-Funktion wie bcrypt, PBKDF2 oder Argon2, mit der Brute-Force-Attacken erschwert werden, auf ein Passwort.

Die Hinterlegung eines Hashes anstelle des Passwortes selbst ist an sich bekannt und verhindert in legitimen Anwendungsfällen, z. B. dem Ablegen eines Zugangspasswortes für einen Account, dass das Passwort direkt aus einem Systemspeicher auslesbar ist. Im Falle einer Backdoor kann das Hinterlegen eines solchen Hashes statt des Klartextpasswortes auch zusätzlich der Verschleierung dienen. Das Auftreten von Passwort-Hashes, welche zu häufig gewählten Passwörtern und folglich zu unsicheren Passwörtern gehören, stellt dabei eine erhebliche Sicherheitslücke dar, die mit den vorgenannten Weiterbildungen des erfindungsgemäßen Verfahrens wirksam geschlossen werden kann.

Durch die Identifizierung und Filterung bestimmter statistischer Besonderheiten in den Softwaredaten kann dabei der Speicherbedarf und die Laufzeit der Suche nach unsicheren Hash-Abschnitten wie Passwort-Hashes in großen Datenmengen vorteilhaft erheblich reduziert werden. Dies führt zu einer effizienteren und kostengünstigeren Untersuchung von Softwaredaten auf Sicherheitslücken.

Die präzise Identifizierung von Hash-Abschnitten, welche unsichere Passwort-Hashes darstellen, ermöglicht eine gezielte Verbesserung der Sicherheit von Software mit solchen Softwaredaten. Durch die Implementierung angemessener Maßnahmen können potenzielle Sicherheitsrisiken effektiv adressiert und die Integrität der Softwaredaten und folglich auch der betreffenden Software gewährleistet werden.

Das erfindungsgemäße Verfahren ist vor allem in solchen Fällen vorteilhaft, in denen der Umfang der zu durchsuchenden Softwaredaten sehr groß ist, insbesondere bei einer kompletten Firmware, und diese überwiegend nicht-zufällige Datenstrukturen aufweist, wie es beispielsweise bei Maschinencode oder lesbarem Text der Fall ist. Viele bekannte und unterschiedliche Ansätze zur Suche nach Hashes von Passwörtern können vom Einsatz des erfindungsgemäßen Verfahrens profitieren.

Das Verfahren gemäß der Erfindung beinhaltet vorzugsweise die Überprüfung der Softwaredaten auf das Zufallskriterium und die Auswahl der Datenabschnitte basierend auf dem Prüfungsergebnis. Dadurch kann eine trennscharfe Auswahl der Datenabschnitte anhand des Zufallskriteriums erfolgen, was die Effizienz der Suche weiter verbessert. Diese Weiterbildung der Erfindung führt folglich zu besonders präzisen und gezielten Suchergebnissen.

Das erfindungsgemäße Verfahren verwendet bevorzugt ein Zufallskriterium, das ein Nichtvorliegen eines stark unterdurchschnittlichen und/oder stark überdurchschnittlichen Hamminggewichts umfasst. Dadurch können zuverlässig Muster in den Softwaredaten identifiziert werden, die sich von typischerweise quasi-zufällig zusammengesetzten Hash-Abschnitten unterscheiden. Der Vorteil dieses Verfahrens besteht darin, dass spezifische Muster in den Softwaredaten erkannt werden können, was die Genauigkeit der Suche nach Hash-Abschnitten verbessert.

Das erfindungsgemäße Verfahren verwendet in einer vorteilhaften Weiterbildung ein Zufallskriterium, das ein Nichtvorliegen eines überdurchschnittlichen Auftretens von Bytes mit dem Wert 0xFF und/oder 0x00 umfasst. Dadurch können spezifische Byte-Muster in den Softwaredaten identifiziert werden. Der Vorteil dieses Verfahrens besteht darin, dass bestimmte Byte-Muster erkannt werden können, die untypisch für das Vorhandensein von Hash-Abschnitten sind, was die Effektivität der Suche verbessert.

In einer vorteilhaften Weiterbildung der Erfindung verwendet das Verfahren ein Zufallskriterium, das ein Nichtvorliegen eines überdurchschnittlichen Auftretens von Bytes aus einer bestimmten Wertemenge umfasst. Dadurch können spezifische Zeichenmuster in den Softwaredaten identifiziert werden. Der Vorteil dieses Verfahrens besteht darin, dass bestimmte Zeichenmuster erkannt werden können, die auf das Vorhandensein von Hash-Abschnitten hinweisen, was die Genauigkeit der Suche erhöht.

Das Verfahren verwendet in einer Weiterbildung der Erfindung vorteilhaft eine Wertemenge, die die ASCII-Zeichen umfasst. Dadurch können spezifische ASCII-Zeichenmuster in den Software daten identifiziert werden. Der Vorteil dieses Verfahrens besteht darin, dass spezifische ASCII-Z eichenmuster erkannt werden können, die auf das Vorhandensein von Hash-Abschnitten hinwei sen, was die Effizienz der Suche verbessert.

In einer bevorzugten Weiterbildung des erfindungsgemäßen Verfahrens umfasst die Wertemen ge Base64-Zeichen. Dadurch können spezifische Base64-Zeichenmuster in den Softwaredaten identifiziert werden. Der Vorteil dieses Verfahrens besteht darin, dass spezifische Base64-Zeich enmuster erkannt werden können, die auf das Vorhandensein von Hash-Abschnitten hinweisen, was die Effektivität der Suche steigert.

Bei dem erfindungsgemäßen Verfahren verwendet dieses vorteilhaft eine Wertemenge, die die Base32-Zeichen umfasst. Dadurch können spezifische Base32-Zeichenmuster in den Software daten identifiziert werden. Der Vorteil dieses Verfahrens besteht darin, dass spezifische Base32 -Zeichenmuster erkannt werden können, die auf das Vorhandensein von Hash-Abschnitten hin weisen, was die Genauigkeit der Suche verbessert.

Das Verfahren verwendet gemäß einer bevorzugten Weiterbildung der Erfindung eine Werteme nge, die die Base32Hex-Zeichen umfasst. Dadurch können spezifische Base32Hex-Zeichenmu ster in den Softwaredaten identifiziert werden. Der Vorteil dieses Verfahrens besteht darin, dass spezifische Base32Hex-Zeichenmuster erkannt werden können, die auf das Vorhandensein von Hash-Abschnitten hinweisen, was die Effizienz der Suche erhöht.

Das erfindungsgemäße Verfahren verwendet bevorzugt eine Wertemenge, die die Hex-Zeichen umfasst. Dadurch können spezifische Hex-Zeichenmuster in den Softwaredaten identifiziert wer den. Der Vorteil dieses Verfahrens besteht darin, dass spezifische Hex-Zeichenmuster erkannt werden können, die auf das Vorhandensein von Hash-Abschnitten hinweisen, was die Effektivit ät der Suche steigert.

In einer bevorzugten Weiterbildung der Erfindung umfasst die Wertemenge genau ein einziges Byte, sodass bei dem Verfahren ein Nichtvorliegen eines überdurchschnittlichen Auftretens dies es Bytes das Zufallskriterium bildet. Oder umgekehrt ausgedrückt wird ein überdurchschnittlich häufiges Auftreten eines bestimmten Bytes als Indikator für nicht zufällig verteilte Daten herang ezogen.

In einer bevorzugten Weiterbildung des erfindungsgemäßen Verfahrens umfasst das Zufallskrite rium ein Nichtvorliegen eines überdurchschnittlichen Auftretens identischer Bytes. Auch das üb erdurchschnittlich häufige Auftreten identischer Bytes wird als Indikator für nicht zufällig verteilte Daten herangezogen.

Besonders bevorzugt kann das Zufallskriterium auch eine Kombination der zuvor beschriebene n Zufallskriterien umfassen.

Das erfindungsgemäße Verfahren wird in einer vorteilhaften Weiterbildung der Erfindung auf Softwaredaten eines Industriegeräts angewendet, wobei die Softwaredaten Teil einer Firmware und/oder Industriesoftware des Industriegeräts sind. Dadurch können effiziente Schwachstellen-Scans in industriellen Umgebungen durchgeführt werden. Der Vorteil dieses Verfahrens besteht darin, dass Hash-Abschnitte in den Softwaredaten von Industriegeräten effektiv gesucht werden können, um die Sicherheit und Zuverlässigkeit dieser Geräte zu gewährleisten.

Das erfindungsgemäße Verfahren wird zweckmäßig auf ein Industriegerät angewendet, das entweder ein Fertigungsgerät ist und/oder eine Fertigungssoftware verwendet, oder ein Bearbeitungsgerät ist und/oder eine Bearbeitungssoftware verwendet, oder ein Transportgerät ist, das eine Transportsoftware benötigt. Der Vorteil dieses Verfahrens besteht darin, dass effiziente Schwachstellen-Scans an Industriegeräten in verschiedenen Bereichen wie Fertigung, Bearbeitung und Transport durchgeführt werden können, um potenzielle Sicherheitsrisiken zu identifizieren und zu beheben. Gerade in diesen Bereichen sind Sicherheitsrisiken besonders relevant und ihre Vermeidung daher besonders vorteilhaft.

Das erfindungsgemäße Computerprogrammprodukt enthält Programmbefehle, die einen Computer zur Ausführung eines Verfahrens nach einem der vorhergehenden Ansprüche veranlassen, wenn diese Programmbefehle auf dem Computer ablaufen.

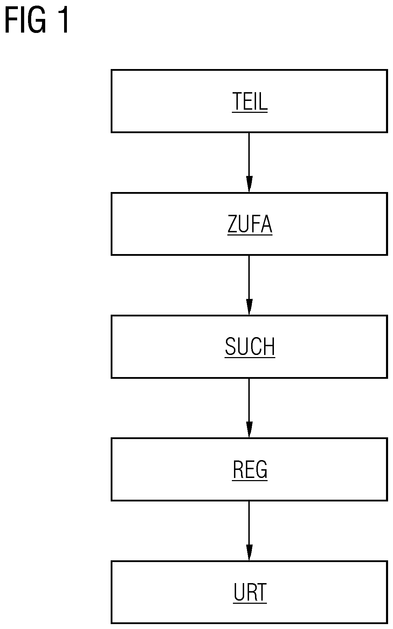

Nachfolgend wird die Erfindung anhand eines in der Zeichnung dargestellten Ausführungsbeispiels näher erläutert. Die einzige Zeichnung 1 zeigt ein Ablaufdiagramm eines erfindungsgemäßen Verfahrens zur Durchsuchung von Softwaredaten auf Hash-Abschnitte, die potentiell Passwort-Hashes beinhalten, in einer prinzipiellen, schematischen Darstellung.

In dem gezeigten Ausführungsbeispiel werden Softwaredaten einer Fertigungs-Firmware eines Fertigungsgeräts auf Passwort-Hashes durchsucht.

In einem ersten Schritt TEIL werden die Softwaredaten der Fertigungs-Firmware herangezogen, welche als eine Menge von Dateien D={d1, d2, ..., dn} vorliegen. Diese Dateien repräsentieren den Maschinencode oder Text, der die Firmware darstellt. IJede Datei enthält eine Vielzahl von Bytes, die analysiert werden sollen. In weiteren, nicht eigens dargestellten Ausführungsbeispielen können die Daten auch als Einzeldatei, etwa als Binary-Image einer Firmware, vorliegen.

In einem zweiten Schritt ZUFA wird ein Zufallskriterium herangezogen und das Zufallskriterium dazu genutzt, diejenigen Bytesequenzen S aus den Dateien D, welche dem Zufallskriterium genügen, auszuwählen. In diesem Schritt ZUFA wird bei dem dargestellten Verfahren die Tatsache ausgenutzt, dass die Softwaredaten strukturiert sind, während Passworthashes aus H={h₁, h₂, ..., hₙ} wie Zufallsdaten aussehen. Es werden bestimmte Muster identifiziert, die in den Softwaredaten wesentlich häufiger vorkommen als in den Passworthashes. Dazu gehören Bytesequenzen der Länge L, die ein stark überdurchschnittliches oder stark unterdurchschnittliches Hamminggewicht aufweisen. Ebenso werden Sequenzen mit einer überdurchschnittlichen Anzahl von Bytes mit dem Wert 0xFF oder 0x00 identifiziert. Zusätzlich werden Sequenzen mit einer überdurchschnittlichen Anzahl von Bytes aus bestimmten Wertemengen wie lesbares ASCII, Base64, Base32, Base32Hex oder Hex-Darstellung berücksichtigt.

Diejenigen Bytesequenzen S aus Dateien D, welche nach diesen Kriterien als zufällig und unstrukturiert angesehen werden können, werden als zufällig eingestuft und in einem Suchschritt SUCH nach Passwort-Hashes durchsucht. Dazu wird eine Datenbank von Passwort-Hashes herangezogen, welche Hash-Daten zu häufig vorkommenden Passwörtern enthalten. Auf diese Passwort-Hashes hin werden die Bytesequenzen S aus Dateien D der Softwaredaten hin durchsucht. Es werden alle Bytesequenzen einer vorgegebenen Länge L aus den Dateien extrahiert und auf das Vorhandensein in der der Datenbank von Passwort-Hashes überprüft. Dabei werden sowohl die Bytesequenzen selbst als auch die möglichen Positionen von Passwort-Hashes innerhalb der Sequenzen berücksichtigt. Statt der Datenbank von Passwort-Hashes kann auch eine Datenbank von häufig verwendeten Passwörtern zum Einsatz kommen, aus denen zur Laufzeit des erfindungsgemäßen Verfahrens mit einer oder mehreren Hashfunktionen die Passwort-Hashes abgeleitet werden

In einem Schritt REG wird Buch darüber geführt, ob Passworthashes aus H in den identifizierten Sequenzen gefunden wurden. Wenn keine Passworthashes gefunden wurden, deutet dies darauf hin, dass die Firmware keine unsicheren Passworthashes enthält. Es wird ein entsprechender Vermerk gemacht, dass die Firmware als sicher betrachtet werden kann.

Wenn Passworthashes in den identifizierten Sequenzen gefunden wurden, kann davon ausgegangen werden, dass die Fertigungs-Firmware unsichere Passworthashes enthält. Es wird ein entsprechender Vermerk gemacht, dass die Fertigungs-Firmware als unsicher betrachtet werden sollte, und die Fertigungs-Firmware sollte in einem weiteren Verfahrensschritt überarbeitet oder ausgetauscht werden und das Fertigungsgerät mit der überarbeiteten oder ausgetauschten Fertigungs-Firmware betrieben werden. In diesem Fall können geeignete Maßnahmen ergriffen werden, wie beispielsweise die Aktualisierung der Passwörter oder die Implementierung stärkerer Passwortrichtlinien. Wird hingegen kein Passworthash in den Dateien D der Softwaredaten gefunden, so wird die Fertigungs-Firmware in einem Beurteilungsschritt URT als sicher beurteilt und das Fertigungsgerät mit der als sicher beurteilten Fertigungs-Firmware betrieben.

## Patentansprüche

1. Computer-implementiertes Verfahren zur Durchsuchung von Softwaredaten auf Hash-Abschnitte, bei welchem aus den Softwaredaten solche Datenabschnitte gewählt werden (TEIL), welche einem Zufallskriterium genügen, das zufällig verteilte Daten von nicht-zufällig verteilten Daten abgrenzt und wobei auf die Hash-Abschnitte vorwiegend die gewählten Datenabschnitte durchsucht (SUCH) werden.

2. Verfahren nach Anspruch 1, bei welchem die Hash-Abschnitte, auf die hin die ausgewählten Datenabschnitte durchsucht werden, Passwort-Hashes sind oder umfassen.

3. Verfahren nach Anspruch 1 oder 2, bei welchem die Softwaredaten auf das Zufallskriterium geprüft (ZUFA) werden und abhängig vom Ergebnis der Prüfung die Datenabschnitte gewählt werden.

4. Verfahren nach einem der vorhergehenden Ansprüche, bei welchem das Zufallskriterium ein Nichtvorliegen eines stark unterdurchschnittlichen und/oder stark überdurchschnittlichen Hamminggewichts umfasst.

5. Verfahren nach einem der vorhergehenden Ansprüche, bei welchem das Zufallskriterium ein Nichtvorliegen eines überdurchschnittlichen Auftretens von Bytes mit dem Wert 0xFF und/oder 0x00 umfasst.

6. Verfahren nach einem der vorhergehenden Ansprüche, bei welchem das Zufallskriterium ein Nichtvorliegen eines überdurchschnittlichen Auftretens identischer Bytes umfasst.

7. Verfahren nach einem der vorhergehenden Ansprüche, bei welchem das Zufallskriterium ein Nichtvorliegen eines überdurchschnittlichen Auftretens von Bytes aus einer bestimmten Wertemenge umfasst.

8. Verfahren nach dem vorhergehenden Anspruch, bei welchem die Wertemenge die ASCII-Zeichen umfasst.

9. Verfahren nach einem der zwei vorhergehenden Ansprüche, bei welchem die Wertemenge Base64-Zeichen umfasst.

10. Verfahren nach einem der drei vorhergehenden Ansprüche, bei welchem die Wertemenge Base32-Zeichen umfasst.

11. Verfahren nach einem der vier vorhergehenden Ansprüche, bei welchem die Wertemenge Base32Hex-Zeichen umfasst.

12. Verfahren nach einem der fünf vorhergehenden Ansprüche, bei welchem die Wertemenge Hex-Zeichen umfasst.

13. Verfahren nach einem der vorhergehenden Ansprüche, bei welchem die Softwaredaten Softwaredaten eines Industriegeräts sind und die Softwaredaten Teil einer Firmware und/oder Industriesoftware des Industriegeräts sind

14. Verfahren nach dem vorhergehenden Anspruch, bei welchem das Industriegerät ein Fertigungsgerät und/oder die Industriesoftware eine Fertigungssoftware ist und/oder das Industriegerät ein Bearbeitungsgerät ist und/oder die Industriesoftware eine Bearbeitungssoftware ist und/oder
das Industriegerät ein Transportgerät ist und die Software eine Transportsoftware ist.

15. Computerprogrammprodukt, enthaltend Programmbefehle, die einen Computer zur Ausführung eines Verfahrens nach einem der vorhergehenden Ansprüche veranlassen, wenn die Programmbefehle auf dem Computer ablaufen.
